# EUROPÄISCHE PATENTSCHRIFT

(11) **EP 0 950 488 B1**
(45) Veröffentlichungstag und Bekanntmachung des Hinweises auf die Patenterteilung: **02.07.2003**
(21) Anmeldenummer: 99107106.9
(22) Anmeldetag: 12.04.1999
(51) Int. Cl.: B29C 35/12, D04H 1/64, B29C 37/00, B29C 39/10, B29C 39/12, B29C 63/02, B29C 69/00

(54) **Verfahren zur Herstellung von mehrschichtigen Formstücken**
Method for producing multilayered products
Procédé pour la fabrication des produits multicouches

(30) Priorität: 14.04.1998 DE 19816478
(43) Veröffentlichungstag der Anmeldung: 20.10.1999
(73) Patentinhaber: Ingenieurbüro für Prozess- und Maschinentechnik Dipl.-Ing. F. Weber, 93354 Biburg-Etzenbach (DE)
(72) Erfinder: Weber, Franz, 93354 Biburg (DE)
(74) Vertreter: Nöth, Heinz, Dipl.-Phys.

(56) Entgegenhaltungen:
- DE-A- 3 707 481
- DE-B- 1 042 791
- GB-A- 1 079 009
- GB-A- 1 278 642
- US-A- 3 795 562
- US-A- 4 803 022
- US-A- 5 635 003
- PATENT ABSTRACTS OF JAPAN vol. 007, no. 029 (M-191), 5. Februar 1983 (1983-02-05) & JP 57 182405 A (IKEDA BUTSUSAN KK), 10. November 1982 (1982-11-10)

## Beschreibung

Die Erfindung betrifft ein Verfahren zur Herstellung von mehrschichtigen Formstücken sowie ein mehrschichtiges Formstück.

Bei einem aus der GB-A-1,278,642 bekannten Verfahren zur Herstellung eines mehrschichtigen Formstückes wird als folienförmiges Dekormaterial eine Aluminiumfolie verwendet, welche mit einem Polyethylenüberzug als Kleber beschichtet ist, und mit einem aus Fasern gebildeten und mit einem Phenolharzbinder überzogenen Trägermaterial mittels dielektrischer Erwärmung in einem Arbeitskondensator verbunden wird. Dabei wird eine der beiden Elektrodenplatten auf eine erhöhte Temperatur gebracht, um ein Erweichen der als Kleber wirkenden Polyethylenschicht zu erreichen.

Aus der US-A-3,795,562 ist es bekannt, mit Hilfe von Prägestempeln durch dielektrische Erwärmung zwei thermoplastische Folien miteinander zu verschweißen, wobei die Hohlräume zwischen senkrecht zueinander verlaufenden streifenförmigen Verbindungsstellen zwischen den beiden Folien mit einem Polyurethanschaumstoffmaterial ausgefüllt ist. Hierdurch soll ein Verfahren verbessert werden, bei welchem die Verbindung der Folien an den streifenförmigen Verbindungsstellen über einen durch Wärme schmelzbaren im dazwischenliegenden Füllstoff imprägnierten Kunststoff erfolgt.

Aus der GB-A-1,097,009 ist es bekannt, ein Dekormaterial entlang von senkrecht zueinander verlaufenden Verbindungslinien mit einem Polyurethanschaumstoff zu verschweißen. Die Verschweißung erfolgt mittels dielektrischer Erwärmung an den linienförmigen Verbindungsstellen. Das Dekormaterial kann aus einem Vinylharzfilm oder einem mit einem Vinylharzfilm verbundenen Gewebe bestehen.

Aus der US-A-4,803,022 ist ein mehrschichtiges Formstück bekannt, bei welchem eine Metallfolie mit einer Glasfasermatte beschichtet ist, die mit einem reaktiven Harz-Härtersystem enthaltend ein Epoxytharz imprägniert ist, wobei beim Härten des Harzsystem durch dielektrische Erwärmung mittels eines elektromagnetischen Hochfrequenzfeldes die Glasfasermatte und die Metallfolie fest miteinander verbunden werden. Gegebenenfalls kann die andere Oberfläche der Glasfasermatte ebenfalls auf die gleiche Weise mit der Glasfasermatte verbunden werden.

Bei der Herstellung duroplastischer Verbundwerkstoffe ist es ferner bekannt (DE-A-1042791), ein Trägermaterial, beispielsweise eine Fasermatte, mit einem reaktiven Harz-Härtersystem gleichmäßig zu beaufschlagen bzw. zu imprägnieren. Anschließend erfolgt gegebenenfalls in einem Formwerkzeug das Vernetzen bzw. Härten des flüssigen, reaktiven Harz-Härtersystems durch Einwirkung eines Hochfrequenzfeldes. Falls eine Dekorschicht aufgebracht werden soll, wird diese anschließend durch Verkleben mit der duroplastischen Schicht unter Einsatz von Klebern aufgebracht.

Aufgabe der Erfindung ist es, ein Verfahren und ein mehrschichtiges Formstück der eingangs genannten Art zu schaffen, bei denen mit verringertem Herstellungsaufwand ein mehrschichtiges Formstück mit duroplastischen Verbundwerkstoffen erreicht wird.

Diese Aufgabe wird beim Verfahren erfindungsgemäß durch die Merkmale des Patentanspruches 1 und beim mehrschichtigen Formstück durch die Merkmale des Patentanspruches 5 gelöst.

Bei der Erfindung wird ein Trägermaterial, beispielsweise eine Fasermatte, die gegebenenfalls in einem Wärmeofen auf eine Mindestrestfeuchte konditioniert ist, mit einem reaktiven Harz-Härtersystem beaufschlagt. Dieser Imprägniervorgang kann mittels einer Spritz- oder Zentrifugalapplikation oder dergleichen in herkömmlicher Weise erfolgen. Zur Polymerisation bzw. Härtung des reaktiven duroplastischen Harzsystems wird die erforderliche Reaktionswärme durch die elektrische Erwärmung des reaktiven Harzsystems mit Hilfe eines auf das reaktive Harzsystem zur Einwirkung gebrachten Hochfrequenzfeldes erzeugt. Die Frequenz liegt bevorzugt im Bereich der Ultrakurzwellen oder Kurzwellen. Hierdurch erreicht man eine gleichmäßige Polymerisation und Verbindung der gehärteten Harzschicht mit dem Trägermaterial. Dieses kann ein Fasermaterial beispielsweise aus Naturfasern, keramischen Fasern, Glasfasern, Kunstfasern, Papiergeweben, Textilgeweben, nichtmetallischem Kemmaterial und dergleichen bestehen.

Die dielektrische Erwärmung des flüssigen duroplastischen reaktiven Harz-Härtersystems kann bevorzugt in einem Werkzeug, insbesondere Formwerkzeug, welches bei der dielektrischen Erwärmung als Arbeitskondensator wirkt, durchgeführt werden. Mit dem Arbeitskondensator ist ein Hochfrequenzgenerator gekoppelt. Die Koppelung kann beispielsweise induktiv erfolgen. Mit der dielektrischen Erwärmung wird gleichzeitig ein Dekormaterial mit dem Harz beim Aushärten verbunden werden. Bei den Dekormaterialien handelt es sich um unpolare, nichtleitfähige Dekormaterialien, wie thermoplastische Polyolifine bzw. Elastomere, Polypropylene, Polysterol, Polyamide, Polyethylen insbesondere in Folienform sowie Textilgewirken, Fliesen, insbesondere Nadelfliesen, und dergleichen. Das Dekormaterial wird dabei während des Härtens über die gesamte Berührungsfläche hin mit dem Harz unlösbar ohne Zusatz von Klebestoffen verbunden. Textile Dekors können in bevorzugter Weise hierfür, insbesondere rückseitig flüssigkeitssperrend ausgebildet sein. Die Haftung zwischen dem Trägermaterial und dem Dekormaterial kann chemisch oder durch Plastifizierung bei der exothermen Polymerisation erreicht werden.

Beim Verbinden des Dekormaterials mit dem Trägermaterial im Werkzeug, insbesondere Formwerkzeug, wirkt das Dekormaterial ohne Beschädigung als Wärmeisolierung gegenüber den kalten Werkzeugoberflächen, wodurch der Polymerisationsprozeß bzw. die Härtung des Reaktivharzes beschleunigt wird. In bevorzugter Weise kommen exotherm härtende Harzsysteme zum Einsatz.

Zur Einstellung des dielektrischen Verlustfaktors des Harzsystems können dem Harzsystem Zuschlagsstoffe, welche die gewünschten Produkteigenschaften nicht beeinträchtigen, zugemischt sein. Geeignete Zuschlagstoffe sind beispielsweise Aluminiumhydroxid, Magnesiumhydroxid, Aluminiumpulver und dergleichen.

Die erforderliche Reaktionswärme wird bei der Beaufschlagung mit dem Hochfrequenzfeld durch Anregung der polaren Anteile des Reaktivharzes erzeugt. Durch Einstellung des dielektrischen Verlustfaktors des Harzsystems bzw. der duroplastischen Matrix läßt sich die erforderliche Reaktionswärme im Zusammenhang mit der elektrischen Spannung genau einstellen.

Die Vorteile der Erfindung bestehen in dem verringerten Herstellungsaufwand gegenüber bisherigen mehrstufigen Prozessen, in der erheblichen Verringerung der Formzeiten zur Formgebung des gewünschten Formstückes, in der vollständigen Vernetzung der Reaktivharzmatrix ohne zusätzliche Temperatur, in dem beschädigungsfreien duroplastischen Hinterpressen des Dekormaterials, in der Vermeidung von Kleberauftrag bei der Dekorkaschierung und in verringerten Formkosten.

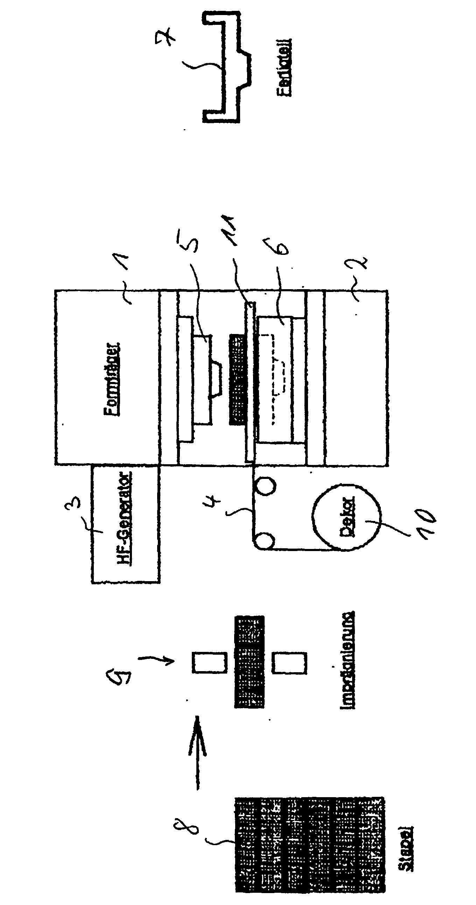

Anhand der Figur wird ein Ausführungsbeispiel noch näher erläutert. Die Figur zeigt ein Formwerkzeug, welches als Arbeitskondensator beim Härten der reaktiven Härtermatrix der duroplastischen Verbundwerkstoffe dient.

Die Figur zeigt einen oberen Formträger 1, an welchem eine obere Formhälfte 5 befestigt ist. An die obere Formhälfte 5 ist ein Hochfrequenzgenerator 3, gegebenenfalls über den Formträger 1 gekoppelt. Die Ankoppelung kann in bekannter Weise induktiv erfolgen. Femer besitzt das Formwerkzeug eine untere Formhälfte 6, die an einem unteren Formträger 2 abgestützt ist. Zwischen den beiden Formhälften befindet sich ein Abstandhalter 11, der dafür sorgt, daß die beiden Formhälften 5 und 6 als Elektroden eines Arbeitskondensators bei der dielektrischen Erwärmung von zwischen den Formhälften angeordneten auszuhärtenden duroplastischen Verbundwerkstoffen wirkt. Der Formvorgang erfolgt unter Druckanwendung, wozu die Formhälften mit ihren Trägern in einer Presse angeordnet sein können.

Dem Formwerkzeug ist eine Imprägnierstufe 9 vorgeschaltet. Der Imprägnierstufe 9 wird ein Trägermaterial 8, welches beispielsweise in gestapelter Form in Bereitschaft gehalten wird, zugeführt. In der Imprägnierstufe 9 wird das Trägermaterial 8, welches eine Fasermatte sein kann und das Kemmaterial eines herzustellenden mehrschichtigen Formstückes 7 bildet, mit einer reaktiven flüssigen Harzmatrix beaufschlagt. In der Imprägnierstufe 9 wird durch bekannte Applikation beispielsweise durch Spritzen, Zentrifugieren, Walzen, Tauchen, Streichen und dergleichen die reaktive Harzmatrix (Duoplast), welche ein Harz-Härtersystem sein kann, auf das Trägermaterial aufgebracht. Das Trägermaterial kann vorher in geeigneter Weise auf eine Mindestrestfeuchte kondensioniert worden sein. Anschließend wird das imprägnierte Trägermaterial zwischen die beide Formhälften 5 und 6 eingebracht. Das Formwerkzeug wird dann gegebenenfalls mit Druckanwendung geschlossen, wobei die beiden Formhälften 5 und 6 durch beispielsweise einen isolierenden Abstandhalter 11 auf Distanz zueinander gehalten werden, so daß sie als Elektroden eines Arbeitskondensators für die dielektrische Erwärmung der reaktiven flüssigen Harzmatrix, mit welcher das Trägermaterial 8 imprägniert ist, wirken können.

Gegebenenfalls kann ein Dekormaterial 4, beispielsweise in Folienform, welches von einer Vorratsrolle 10 abgezogen wird, zusammen mit dem imprägnierten Trägermaterial 8 zwischen die beiden Formhälften 5 und 6 eingebracht werden.

Zur Polymerisation bzw. Härtung des reaktiven duroplastischen Harzsystems wird durch die dielektrische Erwärmung dieses Harzsystems die erforderliche Reaktionswärme zugeführt. Diese wird bewirkt durch das vom Hochfrequenzgenerator 3 erzeugte Hochfrequenzfeld, das an den Arbeitskondensator, welcher von den beiden Formhälften 5 und 6 gebildet wird, angelegt wird. Beim Anlegen des Hochfrequenzfeldes entstehen in der gesamten Masse des zwischen die beiden Formhälften 5 und 6 gelegten Gutes dielektrische Verluste, welche im Inneren des Gutes gleichmäßig in Wärme, welche die Reaktionswärme für die Polymerisation bzw. Härtung des reaktiven duroplastischen Harzes bildet, umgesetzt werden. Die erforderliche Lelstung läßt sich nach entsprechender Einstellung des dielektrischen Verlustfaktors, gegebenenfalls durch Zuschlagstoffe, die der duroplastischen Harzmatrix beigemischt werden und durch entsprechende Einstellung der Spannung des Hochfrequenzgenerators 3 genau bestimmen.

Beispielsweise liegt die Frequenz des Hochfrequenzgenerators bei 27,12 MHz (Wellenlänge ca. 2 m). Ein geeigneter Frequenzbereich liegt bei 10 bis 40 MHz und in Abhängigkeit von der eingesetzten duroplastischen Harzmatrix gegebenenfalls höher.

Eine geeignete duroplastische Harzmatrix kann von einem Epoxidharzsystem gebildet werden. Hierzu eignet sich ein mit der Bezeichnung "XW 507 T 1.5 Harz und XB 5003-1 Härter" von der Firma Ciba-Geigy auf den Markt gebrachtes System. Es können natürlich auch andere bekannte Duroplaste zum Einsatz gebracht werden.

Während des Polymerisations- bzw. Härtevorganges erfolgt die Verbindung von Dekormaterial 4 mit der gehärteten Harzschicht zwischen den beiden Formhälften , ohne daß Klebstoffe zugesetzt werden müssen. Nach Ablauf der erforderlichen Reaktionszeit, welche deutlich unter den bisherigen Reaktionszeiten, bei denen die Wärme durch Wärmetransport über die Formhälften eingetragen wurde, liegt, wird das Werkzeug geöffnet, so daß das fertige Formstück 7 vorzugsweise kalt entnommen werden kann.

Die Polymerisation des reaktiven duroplastischen Harzsystems kann auch ohne Formgebung zwischen flachen oberen und unteren Formhälften 5 und 6 gegebenenfalls mit Kaschierung eines Dekormaterials erfolgen. Man enthält dann ein plattenförmiges flaches Formstück.

## Patentansprüche

1. Verfahren zur Herstellung von mehrschichtigen Formstücken, bei dem
- ein Trägermaterial mit einem flüssigen duroplastischen reaktiven Harzsystem imprägniert wird;
- ein folienförmiges elektrisch nicht leitendes Dekormaterial und das Trägermaterial aneinanderliegend zwischen Elektroden eines Arbeitskondensators angeordnet werden;
- mittels eines an den Arbeitskondensator angelegten Hochfrequenzfeldes das flüssige reaktive Harzsystem durch die elektrische Erwärmung gehärtet wird, wobei
- gleichzeitig mit dem Härten des Harzsystems das folienfönnige Dekormaterial an seiner gesamten Berührungsfläche mit dem Trägermaterial direkt mit dem gehärteten Harz zum Kaschieren des Trägermaterials verbunden wird.

2. Verfahren nach Anspruch 1, **dadurch gekennzeichnet, dass** bei der dielektrischen Erwärmung des zu härtenden Harzsystems das Werkzeug, welches als Arbeitskondensator wirkt, in kaltem Zustand gehalten wird.

3. Verfahren nach Anspruch 1 oder 2, **dadurch gekennzeichnet, dass** der dielektrische Verlustfaktor des reaktiven Harzsystems durch dem Harzsystem beigemischte Zuschlagsstoffe eingestellt wird.

4. Verfahren nach einem der Ansprüche 1 bis 3, **dadurch gekennzeichnet, dass** die dielektrische Erwärmung des Harzsystems im Ultrakurzwellen- oder Kurzwellenbereich durchgeführt wird.

5. Mehrschichtiges Formstück mit einem Trägermaterial, insbesondere Fasermatte, als Kernmaterial und duroplastischen Verbundwerkstoffen bestehend aus einer durch dielektrische Erwärmung polymerisierten Harzmatrix im Kernmaterial und mit einem auf das Kernmaterial kaschierten folienförmigen elektrisch nicht leitenden Dekormaterial, welches über seine gesamte Berührungsfläche mit dem Kernmaterial direkt mit der polymerisierten Harzmatrix verbunden ist.

## Claims

1. A process for producing multilayer mouldings in which
- a carrier material is impregnated with a fluid, thermosetting reactive resin system;
- an electrically non-conductive decorative material in foil form and the carrier material are arranged in mutual contact between electrodes of a working capacitor;
- the fluid reactive resin system is heated by electrical heating by means of a high-frequency field applied to the working capacitor, wherein
- simultaneously with hardening of the resin system the decorative material in foil form is directly connected at its entire contact surface with the carrier material to the hardened resin for lamination to the carrier material.

2. A process according to claim 1 **characterised in that** in the dielectric heating of the resin system to be hardened the tool which acts as the working capacitor is kept in the cold condition.

3. A process according to claim 1 or claim 2 **characterised in that** the dielectric loss factor of the reactive resin system is adjusted by additives which are mixed with the resin system.

4. A process according to one of claims 1 to 3 **characterised in that** dielectric heating of the resin system is effected in the ultrashort-wave or short-wave range.

5. A multilayer moulding comprising a carrier material, in particular fibre matt, as a core material, and thermosetting composite materials comprising a resin matrix polymerised by dielectric heating in the core material and an electrically non-conductive decorative material in foil form which is laminated on to the core material and which is directly connected over its entire contact surface with the core material to the polymerised resin matrix.

## Revendications

1. Procédé pour la fabrication de produits multicouches, selon lequel
- un matériau de support est imprégné d'un système de résine réactif duroplaste liquide ;
- un matériau décoratif non conducteur électriquement en forme de feuille et le matériau de support sont disposés l'un contre l'autre entre des électrodes d'un condensateur de travail ;
- le système de résine réactif liquide est durci par l'échauffement électrique au moyen d'un champ de haute fréquence appliqué au condensateur de travail,
- le matériau décoratif en forme de feuille étant assemblé directement sur toute sa surface de contact avec le matériau de support, simultanément avec le durcissement du système de résine, avec la résine durcie pour le contre-collage du matériau de support.

2. Procédé suivant la revendication 1, **caractérisé en ce que** l'outil, qui fait office de condensateur de travail, est maintenu à l'état froid lors de l'échauffement diélectrique du système de résine à durcir.

3. Procédé suivant l'une des revendications 1 et 2, **caractérisé en ce que** le facteur de dissipation du système de résine réactif est réglé par des additifs mélangés au système de résine.

4. Procédé suivant l'une des revendications 1 à 3, **caractérisé en ce que** l'échauffement diélectrique du système de résine est réalisé dans la gamme des ondes courtes ou ultracourtes.

5. Produit multicouches comportant un matériau de support, en particulier une nappe de fibres, en tant que matériau de noyau et des matières composites duroplastes formées d'une matrice de résine polymérisée par échauffement diélectrique dans le matériau de noyau et un matériau décoratif en forme de feuille assemblé sur le matériau de noyau, **caractérisé en ce que** le matériau décoratif sur toute sa surface de contact avec le matériau de noyau est assemblé directement avec la matrice de résine polymérisée.
